# EUROPEAN PATENT SPECIFICATION

(11) **EP 0 523 834 B1**
(45) Date of publication and mention of the grant of the patent: **14.08.1996**
(21) Application number: 92304830.0
(22) Date of filing: 28.05.1992
(51) Int. Cl.: B60D 1/42, A01B 63/112, E02F 9/20

(54) **Draft control system with closed loop drop/raise rate control of a hitch**
Zugkraft-Regelung mit geschlossenem Regelkreis zum Heben oder Senken einer Anhängevorrichtung
Système de réglage à boucle fermée de commande pour le levage ou la descente de l'attelage

(30) Priority: 10.09.1991 US 757173; 03.06.1991 US 709237; 03.06.1991 US 709236; 03.06.1991 US 709185; 03.06.1991 US 709184
(43) Date of publication of application: 20.01.1993
(73) Proprietor: NEW HOLLAND U.K. LIMITED, Basildon, Essex SS14 3AD (GB)
(72) Inventor: Swierenga, Garrett E., Westmont, Illinois 60559 (US); Nielsen, Bradley A., New Holland, Pennsylvania 17557 (US); Sokol, David G., New Holland, Pennsylvania 17557 (US); Miller, Matthew T., Waterloo, Iowa 50702 (US)
(74) Representative: Singleton, Jeffrey

(56) References cited:
- EP-A- 0 043 725
- EP-A- 0 241 161
- US-A- 4 132 273
- US-A- 4 852 657
- SAE technical paper no 901561 " Development of the Electronic Draft Control System for the Ford New HOlland 8210 Tractor"
- PATENT ABSTRACTS OF JAPAN vol. 10, no. 351 (P-520)27 November 1986 & JP-A-611 150 015 (FUJITSU LTD)

## Description

The present invention relates to an automatic draft control system for controlling the positioning of a hitch to which an implement, such as a plow, is attached. More particularly, this invention relates to improvements in electronic draft control systems of the type disclosed by Macqueene et al. in SAE Technical Paper No. 901561 entitled Development of the Electronic Draft Control System for the Ford New Holland 8210 Tractor.

The aforementioned technical paper describes a microprocessor-based automatic draft control system for a three-point hitch. A tillage implement is attached to the hitch and the hitch is mounted at the rear of a tractor having pneumatic tires. A single quadrant lever, located in the tractor cab, is manually moved by the operator to generate position/draft commands which cause raising or lowering of the hitch. Draft sensors sense the draft on the hitch and a position sensor senses the position of the hitch, the sensors producing feedback signals to the microprocessor. The microprocessor responds to the position/draft commands and the feedback signals from the sensors by generating output signals for adjusting the position of the hitch by selectively energizing raise and lower solenoids associated with an electrohydraulic hitch lift valve.

The system described in the technical paper and the system disclosed in U.S. patent 4,846,283 are provided with a manually operable drop rate potentiometer whereby an operator may adjust the maximum velocity at which a hitch may be lowered. However, these systems employ an open loop rate control. The drop rate signal derived from the drop rate potentiometer modifies the hitch movement command signal which is used to control the movement of the hitch. By limiting the magnitude of the hitch movement command signal the rate of hitch drop is limited. This arrangement does not take into account variable factors such as implement weight, system temperature, valve characteristics, etc. which affect system performance. Thus, these systems do not provide the accurate velocity control necessary when an implement is lowered as it enters a field from a headland. Without accurate velocity control the operator cannot maintain an even headland.

Accurate velocity control is particularly important when an operator is using a manually actuated switch to adjust the position of the hitch. As described in the aforementioned technical paper, switches may be provided on the rear fenders of a tractor so as to be accessible to the operator as he attempts to align the hitch and implement for attachment or removal of the implement.

While the system described above works quite well, it has an undesirable characteristic in that fore-and-aft pitching of the tractor may occur when the implement is above the ground and the quadrant lever is moved to rapidly raise or lower the hitch. Because of its pneumatic tires, the tractor acts as a spring-mass system. Furthermore, as the position and velocity of the hitch changes the weight of the implement is reflected at the draft sensors as an apparent change in draft and the draft sensors falsely indicate the draft. The microprocessor responds to the draft sensor signals by producing an output signal to correct the hitch position. Meanwhile, because of the bounce of the spring-mass system, the apparent draft, as seen by the draft sensors, changes. Thus, oscillating draft feedback signals are generated and as the microprocessor responds to the signals by moving the hitch, the pitching motion is propagated and an undesirable vibration of the tractor occurs.

US-A-4,852,657 discloses an agricultural vehicle which employs a sensor connected to, and moveable with, the hitch, such that a variable magnitude electrical signal is delivered which corresponds to the instantaneous hitch position. This signal is electronically differentiated to produce the signal indicative of actual pitch velocity. The hitch position and velocity signals are both used as feedback signals to close the control loop of the control and thereby provide an adaptive hitch velocity control. However, this arrangement suffers from the same problem discussed above.

An object of the present invention is to provide a novel method and apparatus for controlling hitch velocity.

The present invention is defined in the appended claims and may provide method and apparatus for controlling hitch velocity, comprising sensing the hitch position to obtain a hitch position signal, taking the derivative of the hitch position signal to obtain a hitch velocity signal, subtracting the hitch velocity signal from the set point velocity value to obtain a velocity error signal, integrating the velocity error signal, and modifying the hitch movement command with the integrated velocity error signal.

The method and apparatus for controlling hitch velocity may take into account such variable factors as implement weight, system temperature and valve characteristics.

The invention may further provide a method and apparatus for controlling hitch velocity by providing a closed loop velocity control circuit responsive to a hitch position signal for deriving a hitch velocity signal, and controlling the magnitude of a hitch command in accordance with the difference between the hitch velocity signal and a threshold or set point velocity value. The set point velocity value may be selected by manual operation of a potentiometer or by manual operation of a selection switch.

The invention and its mode of operation will become apparent upon consideration of the following description, given by way of example, and the accompanying drawings, in which :-
Fig. 1 illustrates a tractor-mounted hitch having a tillage implement attached thereto;
Fig. 2 is a schematic view of a three point hitch and an automatic draft control therefor;
Fig. 3 illustrates the control microprocessor and inputs and outputs therefor;
Fig. 4 is a schematic diagram illustrating logic used in the automatic draft control;
Fig. 5 is a diagram illustrating logic for the drop rate velocity control;
Fig. 6 is a flow diagram illustrating logic for the external mode velocity control;
Fig. 7 is a diagram illustrating logic for heavily filtering draft feedback signals during the intervals the hitch is being re-positioned above ground; and
Fig. 8 is a flow diagram illustrating a routine which may be executed by the microprocessor of Fig. 3 to carry out the logic illustrated in Fig. 5.

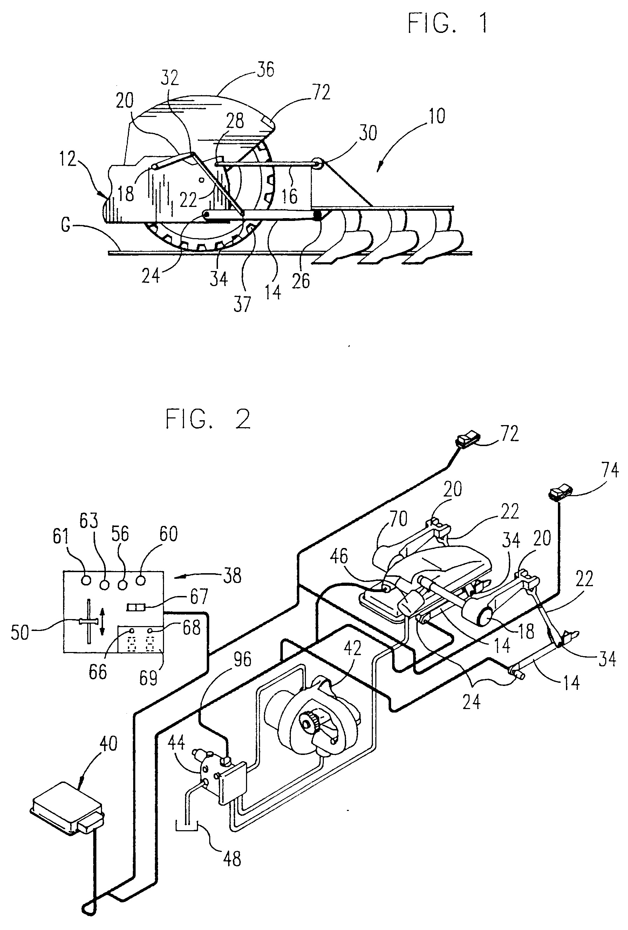

Fig. 1 illustrates a three-point hitch connecting a moldboard plow or other tillage implement 10 to the rear of a tractor 12. The hitch comprises left and right lower links 14 (Fig. 2), an upper link 16, a rockshaft 18 having crank arms 20 affixed thereto, and left and right adjustable links 22.

The lower links 14 are pivotally attached at one end by pins 24 to a frame member of the tractor, and at the other end links 14 are pivotally attached to the implement 10 by pins 26. Upper link 16 is pivotally attached to a frame member of the tractor by a pin 28, and pivotally attached to implement 10 by a pin 30. Each adjustable link 22 is connected at one end by a pivot pin 32 to a crank arm 20 and connected at the other end by a pivot pin 34 to an intermediate position of a lower link 14.

The position of implement 10 relative to ground G is adjusted by rotating rockshaft 18 through an arc. In Fig. 1, as the rockshaft 18 is rotated counter-clockwise, crank arms 20 act through adjustable links 22 to pivot lower links 14 counter-clockwise about pins 24. As link pins 26 are raised, the upper link 16 prevents the weight of the implement from pivoting the implement downwardly about pins 26, and the upper portion of the implement pivots in an arc whose center is located at pin 28.

Fig. 2 schematically illustrates an automatic draft control system for controlling the movements of the hitch by controlling movement of the rockshaft 18. The control system includes an electronic draft control (EDC) console 38, a microprocessor 40, a pump 42, an electro-hydraulic proportional control valve 44, and a hydraulic lift cylinder 46.

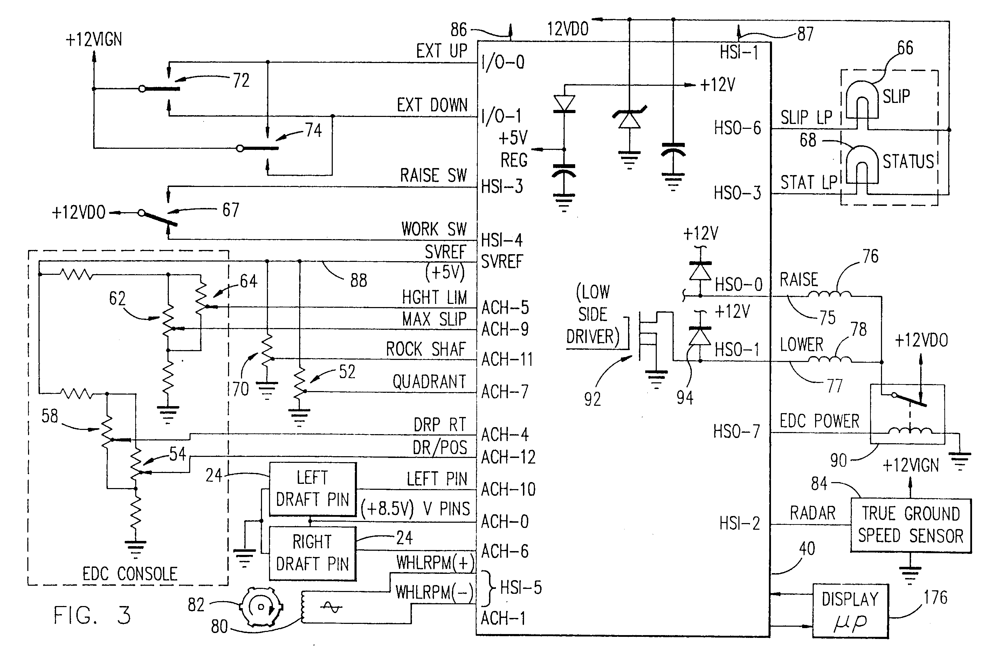

The control console 38 has a hitch lift control or quadrant lever 50 which is pivoted near its lower end. As the lever 50 is moved forwardly or backwardly it actuates a potentiometer 52 (Fig. 3). The quadrant lever is used to control the positioning of the hitch. A stop (not shown) is provided for limiting forward movement of the quadrant lever 50. When the quadrant lever is moved forwardly beyond the stop, it places the control system in an open-loop or external mode which permits use of external fender switches to control positioning of the hitch.

The console also includes a position/draft mix control potentiometer 54 (Fig. 3) operated by a control knob 56 and a drop rate control potentiometer 58 operated by a control knob 60. The purpose of the control potentiometers 54 and 58 is explained below.

A digital display 69 is provided on the console to indicate the relative hitch position. In addition, the EDC console also includes a slip control knob 61 for controlling a maximum slip limit potentiometer 62, a height limit control knob 63 for controlling a height limit potentiometer 64, a slip indicator lamp 66 and an EDC status lamp 68. A work/raise rocker switch 67 is also provided on the console. This switch enables the operator to selectively raise the hitch to the height limit set by control knob 63, or lower the hitch to the position specified by the quadrant lever 50, by merely actuating the switch.

As subsequently explained, the hitch height may be controlled by a variable mix of position and draft signals. This requires that the position of the hitch and the draft be known. Therefore, a rotary potentiometer 70, driven by rockshaft 18, is provided to sense the position of the hitch. The pivot pins 24 are load sensitive pins such as those available from the Robert Bosch company and provide a means for sensing the draft. These pins provide an electrical output signal directly related to the horizontal component of the forces on the lower links 14.

To provide for manual control of the hitch position when attaching or detaching an implement 10, two three-position rocker switches 72 and 74 are mounted on the left and right fenders 36 covering the rear tractor wheels 37. Switches 72 and 74 are rendered operable by first moving the quadrant lever 50 forwardly past the stop position to initiate an external mode of operation. While the system is in the external mode, either switch 72 or 74 may be manipulated to raise or lower the hitch. The external mode, once initiated, remains in effect until the quadrant lever 50 is moved rearwardly of the stop position. The closed loop mode is restored when the hitch is "recaptured" by moving quadrant lever 50 to a position which corresponds to the present hitch position.

Generally speaking, microprocessor 40 repeatedly samples the output signals from the various sensors, switches and potentiometers, and produces a pulse width modulated signal for controlling a "raise" solenoid 76 or a "lower" solenoid 78 (Fig. 3) associated with the closed-center valve 44. To raise the hitch, fluid pressurized by pump 42 is passed through the valve to extend lift cylinder 46 which rotates rockshaft 18 counter-clockwise. To lower the hitch, the "lower" solenoid is energized to dump fluid from the lift cylinder 46 through valve 44 to sump 48. The hitch falls under its own weight and rotates the rockshaft 18 clockwise to retract the lift cylinder.

Referring now to Fig. 3, the microprocessor 40 may be an EEC-IV module of the type used by Ford Motor Company for automotive engine control. The microprocessor module comprises a type 8061 microprocessor with a 32K byte EPROM and a 16x16 bit E²PROM. The module also includes a plurality of analog input channels with A/D conversion means for converting the analog input signals to digital signals for use in the microprocessor. The outputs of potentiometers 52, 54, 58, 62, 64 and 70 and the draft sensor pins 24 are connected to the analog input channels. The fender switches 72 and 74 and the raise/work switch 67 are connected to digital inputs of the microprocessor.

The microprocessor 40 has a frequency input which is connected to a magnetic sensor 80. This sensor senses teeth on a gear 82 which rotates with the rear wheel axle of the tractor. The sensor produces an output signal at a frequency proportional to the rate of rotation of the axle. This signal is calibrated under zero wheel slip conditions as subsequently described so that it may be used as a representation of wheel speed regardless of the effective rolling radius of the wheels. A doppler radar unit 84 is mounted on one side of the tractor and directed toward the ground forwardly of the unit. The radar unit senses true ground speed and applies to the microprocessor signals representing this speed. The wheel (axle) speed sensor and radar output signals are analyzed by the microprocessor to determine the degree of tractor wheel slip.

Power for the microprocessor and EDC control system is derived from the battery of tractor 12. Battery power is continuously applied to microprocessor 40 over lead 86 to power a keep-alive memory in the microprocessor. This memory enables stored data and status information to be retained when the tractor ignition switch (not shown) is off. A voltage +12VIGN is derived from the battery through the ignition switch. The battery also provides a voltage +12VDO through a relay circuit that does not drop out until 8 seconds after the ignition key switch is turned off. This latter voltage is applied to a voltage regulator circuit within the microprocessor 40 to generate a regulated voltage +5V. This voltage is applied to logic circuits within the microprocessor. In addition, the +5 volt signal is applied over a lead 88 to the potentiometers 52, 54, 58, 62, 64 and 70. A lead 87 is connected to the ignition switch and provides a signal to the microprocessor when the switch is closed.

Insofar as the electronic draft control is concerned, the microprocessor has only five outputs. Two of these outputs are for energizing the slip lamp 66 which is energized when the degree of wheel slip exceeds the limit as set by operator adjustment of potentiometer 62 and EDC status lamp 68 which indicates if the automatic draft control is active or inactive. Two additional outputs are provided for energizing the raise solenoid 76 and lower solenoid 78 associated with the lift control valve 44. The last output energizes the coil of a safety relay 90 having a normally closed contact connected between +12VDO and the raise and lower solenoids 76 and 78.

As shown in Fig. 3, the other side of the lower solenoid 78 is connected through a low side driver 92 to ground, and through a diode 94 to +12V. The raise solenoid 76 is similarly connected to a further low side driver (not shown). Normally, the relay 90 is not energized so that +12V is applied through its normally closed contacts to the solenoids 76 and 78. When the hitch is to be lowered, the microprocessor produces a pulse width modulated signal that turns on the driver 92 thus establishing a circuit from +12V through the solenoid 78 and the driver to ground. The solenoid 78 controls valve 44 so that hydraulic flow to the lift cylinder 46 is reduced and the hitch drops because of its own weight and the weight of the implement 10. To raise the hitch, the driver for solenoid 76 is turned on to energize the solenoid. The solenoid operates the valve so that fluid under pressure is applied to the lift cylinder from the pump 42.

From Fig. 2, it is evident that the leads 75 and 77 between the microprocessor 40 and the raise and lower solenoids 76 and 78 associated with valve 44 extend from some length through a wiring harness 96. Furthermore, it is evident from Fig. 3 that if the lead 77 should be shorted to ground, the lower solenoid 78 would be energized in the same manner as if the low side driver 92 were turned on. A similar situation exists for the raise solenoid 76 if lead 75 is shorted. As explained in copending Application No. 709,236, relay 90 is provided to inhibit uncommanded movement of the hitch as a result of such shorts.

The microprocessor 40 may have additional inputs and outputs permitting it to control the tractor transmission and a tractor performance monitor but these are not shown in Fig. 3 since they are not necessary for an understanding of the present invention.

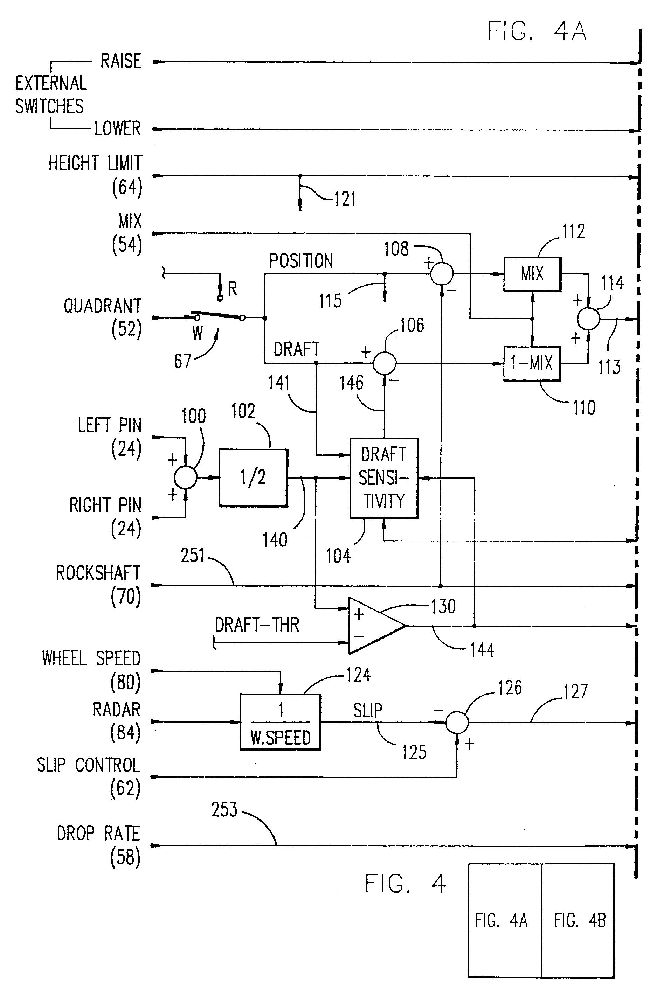

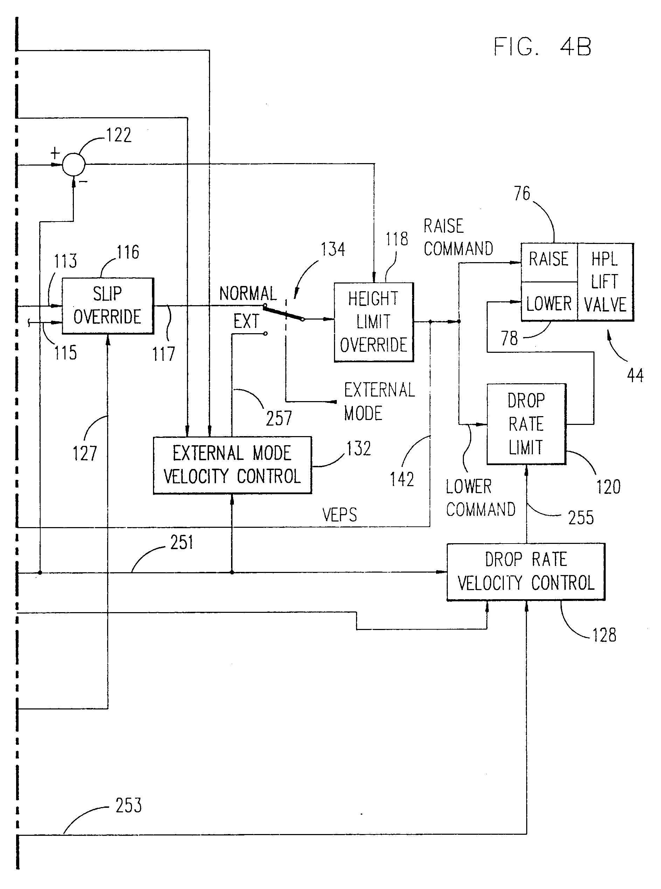

Fig. 4 is a schematic circuit diagram illustrating the logical sequence of operations performed by the program which controls microprocessor 40. These operations need not be performed by a programmed microprocessor. They could also be performed by a combination of analog or digital hardware elements and for the sake of simplicity are described herein as such.

Most of the input control signals for the electronic draft control are shown at the left of Fig. 4. These signals have been derived by sensing the various potentiometers, sensors and switches and, where appropriate, digitizing the analog signals and then digitally filtering them. Furthermore, the signals may have been subjected to a scaling function prior to the time they appear as input signals in Fig. 4. These operations are conventional and thus are not shown.

After the signals from the right and left draft sensor pins 24 are digitized, compensation made for the static weight of the hitch, and low pass filtered to eliminate frequencies above about 3.2Hz, they are added together by an adder 100 and the sum divided by 2 by a divider 102 to obtain an average composite draft feedback signal COMPDRFT_I which is applied to a draft sensitivity control 104 over a path 140. As described in copending Application No. 709,185, the draft sensitivity control 104 either applies the signal COMPDRFT_I directly to a subtractor 106, or low pass filters the signal before applying it to the subtractor so that frequencies above 0.5Hz are filtered out. The purpose of the draft sensitivity control is to reduce tractor vibrations which would otherwise occur as the hitch moves in response to a change in the position of quadrant lever 50.

The quadrant lever 50 (Fig. 2) provides single-lever control of both a hitch position command and a draft command. The signal derived from the quadrant lever potentiometer 52 is applied to the raise/work switch 67 and if the switch is set to the "work" position a digitized signal (Q_EFF) is applied to the draft sensitivity control 104 over a path 141. Q_EFF is also subjected to two different shaping functions (not illustrated) to derive a draft command which is applied to a subtractor 106 and a position command which is applied to both the subtractor 108 and a wheel slip override circuit 116. The digitized output of the rockshaft potentiometer 70 is also applied to the subtractor 108 so that the subtractor produces an output proportional to the difference between the hitch position as commanded by the quadrant lever 50 and the actual hitch position as sensed by the rockshaft potentiometer 70. In like manner, the output of subtractor 106 represents the difference between the draft as commanded by the quadrant lever 50 and the actual draft as sensed by the draft sensor pins 24.

The difference values obtained by subtractors 106 and 108 are fed to two mix determining circuits 110 and 112, respectively, where the output of subtractor 108 is multiplied by a mix factor determined by the setting of mix potentiometer 54. The output of the mix potentiometer is scaled to represent a value in the range of 0.3 to 1.0. The output of the subtractor 106 is multiplied by one minus the mix factor. The resulting values obtained at 110 and 112 are then summed by an adder 114.

The value derived by adder 114 may be subjected to slip override modification at 116 or height limit override modification at 118 before it is utilized to generate a pulse width modulated signal for application to the raise or lower solenoid 76 or 78 associated with the lift valve 44. In addition, if the output at 118 calls for lowering the hitch, the "lower" command may be further modified at 120 to limit the rate at which the hitch is lowered.

Since operation of the lift valve 44 changes the position of the rockshaft and thus the position of the hitch relative to the ground, and the depth to which the implement penetrates the ground affects the signals generated by draft sensor pins 24, it is seen that Fig. 4 illustrates two inter-dependent closed loops, a position feedback loop and a draft feedback loop, with the input control for both loops being derived from the quadrant lever 50 and the control signals being weighted by the setting of the mix potentiometer 54. The above-referenced SAE Technical Paper No. 901561 describes a draft/position feedback loop of this type.

The height limit potentiometer 64 enables the operator to manually select the maximum height to which the hitch may be raised. A subtractor 122 subtracts the signal derived from the rockshaft potentiometer 70 from the signal derived from potentiometer 64. As the hitch approaches the selected height limit the raise command applied at the output of circuit 118 is forced to zero.

The slip override circuit 116 is controlled by the outputs of radar unit 84, wheel speed sensor 80, the draft command from the quadrant lever, and the slip control potentiometer 62. The radar unit measures true ground speed (TGS) while the sensor 80 measures nominal wheel speed. After correction of the nominal wheel speed value as described in copending Application No. 709,237, the true ground speed is divided by the wheel speed (W_SPEED) at 124 to compute the degree of wheel slip. The slip value is compared at 126 with a maximum permissible slip value set by the operator on slip control potentiometer 62. When actual slippage exceeds the selected maximum, a signal is produced on path 127 which modifies the value in the main control loop so that the hitch is raised. This lifts the implement 10 relative to the ground so as to place a smaller load on the tractor, and this in turn reduces wheel slip.

The purpose of the drop rate velocity control circuit 128 is to permit the operator to select the maximum velocity at which the hitch may be lowered. The operator selects the drop rate by adjusting the drop rate control knob 60 (Fig. 2) to thereby set the output of potentiometer 58 (Fig. 3). Once a drop rate has been selected, the circuit 128 continuously adjusts the valve "lower" command at 120 to maintain the selected hitch velocity.

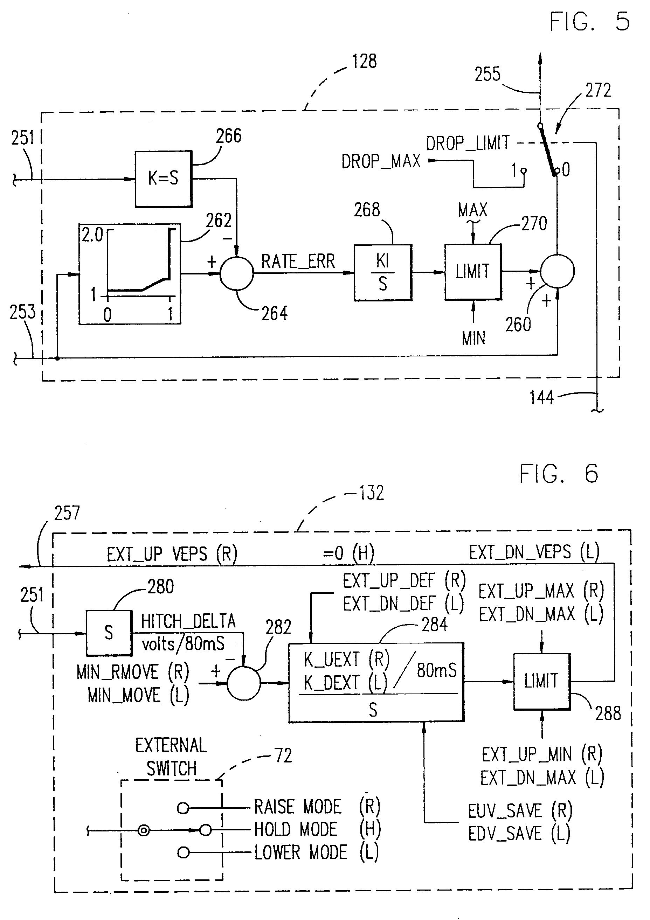

Fig. 5 illustrates the logic of the drop rate velocity control 128. Microprocessor 40 digitizes the output from the drop rate potentiometer 58 and subjects it to a shaping function or table look up procedure, the result then being applied to adder 260 over path 253. The velocity command signal on path 253 is subjected to a further function shaping at 262 and applied to a subtractor 264.

The output of the rockshaft potentiometer 70 (Fig. 3) is digitized by microprocessor 40 and, after function shaping, is applied over a path 251 to a circuit 266 (Fig. 5) which takes the first derivative of its input. Since the output of potentiometer 70 represents the position of the hitch, the output of the derivative circuit 266 is a signal representing the rate of change of hitch position, i.e. hitch velocity. This signal is applied to subtractor 264. Subtractor 264 subtracts the actual hitch velocity as derived from differentiator 266 from the hitch velocity signal produced by function shaper 262 to derive a hitch velocity error signal which is applied to an integrator 268.

The output of the integrator 268 is a hitch velocity error signal represented in units of hitch position error. The error signal is applied to a limit circuit 270 where its magnitude is limited if it exceeds a maximum or is less than a minimum value. The output of the limit circuit is applied to adder 260 where it is added to the drop rate signal derived from the drop rate potentiometer. The output of adder 260 is then applied through a switch 272 to the drop rate limit circuit 120 where it modifies the "lower" command produced by height limit override circuit 118. The resulting valve command signal, when applied to the hitch lift valve, decreases or increases the rate of downward hitch movement to achieve the desired velocity as specified by the setting of the drop rate potentiometer 58. As the hitch moves, its position is sensed by rockshaft potentiometer 70 to provide the feedback signal to the drop rate velocity control circuit 128 so that the hitch velocity is continuously adjusted to the commanded velocity. In a typical embodiment, the drop rate may be varied from a drop time of 10 seconds to a drop time on the order of 2 to 3 seconds.

In order to maintain responsive draft corrections when the implement is in engagement with the ground, the drop rate velocity control 128 must be disabled. The average composite draft signal produced by divider 102 is applied to one input of a comparator 130 where it is compared with a threshold value. When the implement contacts the ground the draft signal exceeds the threshold value and the comparator generates an output signal on lead 144 to change the state of switch 272. This disconnects the drop velocity feedback loop and connects a maximum drop rate value to the output lead 255 of the drop rate velocity control circuit 128.

The external mode velocity control logic 132 is provided so that a consistent, slow rate of hitch movement may be obtained as the operator operates the fender switches 72, 74. Slow movement of the hitch is required to align the links 14 of the hitch with the implement 10 so that pins 26 may be inserted to connect the implement to the hitch.

The external mode velocity control logic 132 is enabled only by moving the quadrant lever 50 forward beyond a stop position so as to generate the External Mode command. In Fig. 4, this operation is equivalent to a switch as illustrated at 134. When the system is in the External Mode, the position/draft feedback control loop is open and the output of the circuit 132 is applied to the height limit override circuit 118 so that the operator may manually control the positioning of the hitch by means of the external fender switches 72, 74. The output of circuit 132 is disabled and the closed loop position mode restored by capturing the hitch by moving the quadrant lever 50 to generate a position command corresponding to the current position of the hitch.

Fig. 6 is a circuit diagram illustrating the logical operations performed by microprocessor 40 in controlling the hitch velocity as one of the external fender switches 72, 74 is actuated to raise or lower the hitch. Only the external switch 72 is illustrated in Fig. 6 since the microprocessor 40 responds to the switches 72 and 74 in exactly the same way.

Switch 72 is a 3-position rocker switch which produces no output signal when in its center (H = HOLD) position. In the other two positions the switch produces an output signal to the microprocessor 40 to define a Raise mode (R) or a Lower mode (L).

The hitch position signal on path 251 is derived from the rockshaft position sensing potentiometer 70 as described above and is applied to a derivative determining circuit 280. The output of the derivative circuit is the hitch velocity signal HITCH_DELTA in units of volts per 80ms where 80 milliseconds is the time interval chosen to compute the velocity. HITCH_DELTA is applied to a subtractor 282 where it is subtracted from one of two values MIN_RMOVE or MIN_MOVE depending on whether external switch 72 is in a position defining the Raise mode or the Lower mode, respectively. MIN_RMOVE and MIN_MOVE are values defining the set point or desired hitch velocity when the hitch is being raised or lowered, respectively. The output of the subtractor 282 is the hitch velocity error signal.

The hitch velocity error signal is integrated at 284 over an interval of 80ms and multiplied by one of two gain factors K_UEXT or K_DEXT depending upon whether switch 72 is defining the Raise or Lower mode, respectively. When the External Mode is entered, the integrator 284, and thus the initial hitch movement command, is set to one of two constant values EXT_UP_DEF or EXT_DN_DEF depending upon the mode defined by switch 72.

The hitch movement command produced at the output of integrator 284 is limited at 288 to a maximum value EXT_UP_MAX or EXT_DN_MAX and a minimum value EXT_UP_MIN or EXT_DN_MIN depending on whether switch 72 defines the Raise or Lower mode. The resulting signal available at the output of limiter 288 is applied over path 257 and through switch 134 to the height limit override function 118. When switch 72 defines the Raise mode, the output of limiter 288 is the signal EXT_UP_VEPS and after the height limiting it is applied to the raise solenoid 76. When switch 72 defines the Lower mode, the output of limiter 288 is the signal EXT_DN_VEPS and after bypassing or passing through the height limiting function without change, it is applied through the drop rate limit function 120 to the "lower" solenoid 78.

When the switch 72 defines the Hold mode (H), the signal on lead 257 is zero so that movement of the hitch is stopped. Placing switch 72 in its center position removes all input signals to Fig. 6 except for the hitch position signal on lead 251, and the output of limit circuit 288 goes to zero.

Each time that a lower (or raise) sequence is started, the integrator 284 is reset to an initial hitch movement command value EDV_Save (or EUV_Save) which is the initial command to the lower or raise solenoid for the hitch lift valve 44. The algorithm is adaptive in that EDV_Save (or EUV_Save) is updated to be equal to the output of limiter 288, less a small amount, when the actual hitch velocity is greater than or equal to the desired hitch velocity. Thus, the next time an external lower (or raise) command is initiated the algorithm starts with the stored updated value of EDV_Save (or EUV_Save). This eliminates delays in initiating hitch motion and if the initial value results in a velocity faster than the desired velocity, the algorithm quickly integrates to the correct value.

From the foregoing description it is seen that the present invention provides closed loop feedback control of hitch velocity so as to achieve consistent performance regardless of variations in implement weight, system temperature or pilot pressure or other valve characteristics. Furthermore, the invention provides slow and smooth hitch movement in response to actuation of manual switches thus making it easier for an operator to adjust the hitch height when attaching or removing an implement.

As previously explained, the automatic draft control system controls the hitch in response to position and draft feedback signals derived from the rock-shaft potentiometer 70 and the draft sensing pins 24. The system must be very sensitive to changes in the draft signal in order to achieve the desired level of responsiveness. However, the tractor with its pneumatic tires forms a spring-mass system so that a forward-aft pitching motion may result when the implement 10 is rapidly raised or lowered. This motion induces oscillating draft signals on the draft sensing pins 24. As the control system attempts to respond to these oscillating signals, the resulting hitch motion can propagate the pitching motion, the result being undesirable vibrations of the tractor. These vibrations may be overcome by low pass filtering the draft signal to a relatively low bandwidth during intervals when the operator is manually raising or lowering the hitch, and reverting to a more responsive (less heavily filtered) mode as the hitch approaches the desired position.

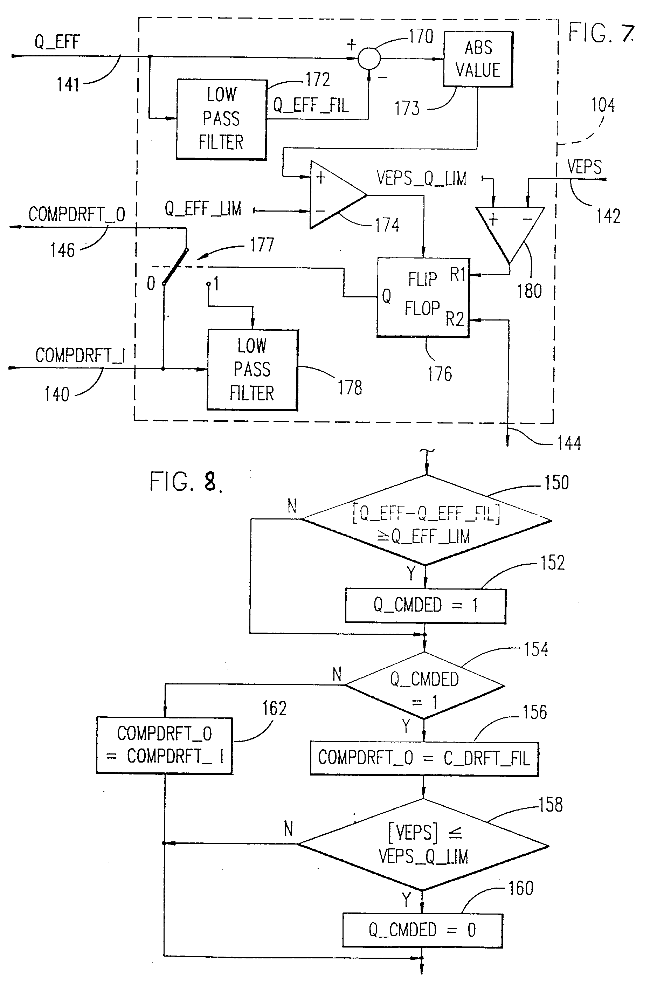

Fig. 7 illustrates the logic in draft sensitivity control circuit 104 for selectively changing the draft sensitivity by heavily filtering the composite draft signal COMPDRFT_I before applying it to subtractor 106 when the hitch positioning system is responding to quadrant lever movement commanding a change in hitch position. As shown in Fig. 5, the composite draft signal COMPDRFT_I, produced by the divider 102 of Fig. 4, is directly applied through a normally closed switch 177 to the lead 146. As shown in Fig. 4, lead 146 is connected to subtractor 106 in the hitch control loop. Thus, the signal COMPDRFT_I, which has already been filtered to remove frequencies above 3.2Hz, is applied to the control loop as the signal COMPDRFT_O as long as switch 177 remains in the position shown. This is the normal condition of circuit 104 when the hitch position is under closed loop control and the operator does not move the quadrant lever 50.

The elements 170 and 172-174 comprise a means for detecting movement of quadrant lever 50. The quadrant lever output Q_EFF is applied directly to one input of subtractor 170 and through low pass filter 172 to a second input of the subtractor. The filter delays Q_EFF so the subtractor produces a positive or negative output depending on whether Q_EFF is increasing or decreasing. This output is also proportional to the rate of increase or decrease.

The output of subtractor 170 is then taken as an absolute value at 173 and applied to one input of a comparator 174 where it is compared with a threshold value Q_EFF_LIM. This threshold value is chosen so as to prevent small, slow movements of the quadrant lever 50 from invoking heavy filtering of COMPDRFT_I since such quadrant lever movements do not result in large tractor pitching motions. However, if the output of the absolute value circuit 173 exceeds Q_EFF_LIM, comparator 174 produces an output signal to set an indicator illustrated as flip-flop 176.

When flip-flop 176 is set, it switches switch 177 so that the output of filter 178 is connected to lead 146. Filter 178 is a first order low pass filter which filters from the signal COMPDRFT_I those frequencies above 0.5Hz. Thus, variations in the draft signals sensed at pins 24 as a result of apparent weight changes of the hitch and implement are filtered from COMPDRFT_I before it is applied to the subtractor 106 in the control loop.

Once the flip-flop 176 is set, it remains set until the hitch approaches the new position commanded by the quadrant lever. Referring to Fig. 4, the system error, that is, the difference between the position commanded by the quadrant lever and the actual hitch position, is represented by the absolute magnitude of the signal VEPS produced at the output of the height limit override circuit 118. The error signal VEPS is applied to one input of a comparator 180 in Fig. 5. A threshold value VEPS_Q_LIM is applied to a second input of the comparator. As the actual hitch position approaches the commanded position, VEPS drops to a value equal to or below VEPS_Q_LIM and comparator 180 produces an output signal to reset flip-flop 176. When the flip-flop is reset, switch 177 returns to the position shown in Fig. 5 so that COMPDRFT I is again passed through the switch to become the signal COMPDRFT_O.

The flip-flop 176 has a second reset input which is derived from the comparator 130 of Fig. 4. As previously explained, this comparator produces an output signal when the implement 10 is in contact with the ground. When the implement is in the ground the system must be very sensitive to changes in the draft signal COMPDRFT_I hence circuit 104 is disabled by resetting flip-flop 176.

Fig. 8 illustrates a routine which may be executed by microprocessor 40 to provide the same draft sensitivity control as that provided by the logic of Fig. 5. In Fig. 6, step 150 corresponds to the functions performed by elements 170 and 172-174. If step 150 determines that the absolute magnitude of the difference between Q_EFF and Q_EFF_FIL is equal to or greater than Q_EFF_LIM then at step 152 an indicator Q_CMDED is set. This is equivalent to the setting of flip-flop 176.

At step 154 indicator Q_CMDED is tested to see if it is set. Since it was set at step 152, the test at step 154 proves true and the routine moves to step 156 where COMPDRFT_O is set to C_DRFT_FIL where C_DRFT_FIL is COMPDRFT_I low pass filtered to 0.5Hz. In Fig. 5, this corresponds to the connection of the output of filter 178 through switch 177 to lead 146.

At step 158, the absolute magnitude of the error signal VEPS is compared with the limit value VEPS_Q_LIM and as long as VEPS is greater an exit is made from the routine. This corresponds to the output of comparator 180 failing to reset flip-flop 176.

Assuming movement of the quadrant lever 50 has ceased, the next time the routine is entered the test at step 150 proves false and the routine branches directly to step 154. Since Q_CMDED is still set, COMPDRFT_O is again made equal to C_DRFT_FIL at step 156 and VEPS is tested at step 158. An exit is again made from the routine from step 158 if the test at step 158 proves false.

Assuming no further movement of the quadrant lever, the feedback loop is continuously adjusting the hitch position to that commanded by the quadrant lever signal. During this interval steps 150, 154, 156 and 158 are repeatedly executed with the magnitude of the error signal VEPS becoming progressively smaller as the hitch approaches the commanded position. Eventually, VEPS becomes equal to or less than VEPS_Q_LIM and the test at step 158 proves true. Q_CMDED is reset to zero at step 160 before an exit is made from the routine. Assuming no further movement of the quadrant lever, the next time the routine is executed the tests at steps 150 and 154 both prove false. The routine branches to step 162 wherein COMPDRFT_O is made equal to COMPDRFT_I. In Fig. 5, this is equivalent to returning switch 177 to the position shown.

From the foregoing description of Figs. 7 and 8 it is seen that this aspect of the present invention provides a simple and inexpensive method and apparatus for reducing pitching motion of a tractor during raising and lowering of a hitch.

While a preferred embodiment of the invention has been described with reference to hitch velocity control of a hitch carrying a ground engaging implement, it will be understood that the basic principles of the invention are applicable to velocity control of other devices such as the header on a forage harvester or combine or the bucket on a loader. It is intended therefore that the invention be limited only by the scope of the appended claims.

## Claims

1. An electronic draft control system operable to control the positioning of a vehicle-mounted hitch, the system including position sensing means (70) for sensing the position of the hitch and producing a signal representative thereof, and command generating means (50) operable to generate a hitch movement command, the system being operable in a closed-loop mode in which the command generating means (50) is responsive to the position sensing means (70) and an input command to control the position of the hitch, and operable in an open-loop mode in which the movement of the hitch is controlled by a hitch movement command selected by a manually-operable switch (72,74),
characterised in that the system comprises :
first means (128) operable at least when the system is in the closed-loop mode to limit the velocity of the hitch to a set point value selectable by manual operation of a potentiometer (56); and
second means (132) operable when the system is in the open-loop mode to limit the velocity of the hitch to one of two set point values selectable by the switch (72,74),
wherein the first and second means (128;132) each comprises:
derivative means (266;280) responsive to the position sensing means (70) to produce a hitch velocity signal;
means (264;282) responsive to the hitch velocity signal and a selected set point value to produce a velocity error signal;
means (268;284) for integrating the velocity error signal; and
wherein the first means (132) further includes :
means (260) responsive to the integrated velocity error signal and a signal representing the selected set point value to produce a sum signal representing the sum of the integrated velocity error signal and the signal representing the selected set point value; and
means (120) responsive to the sum signal to limit the hitch movement command.

2. A system according to claim 1, wherein said second means (132) further include means for storing the value of the hitch movement command for subsequent use as an initial value.

3. A system according to claim 1 or 2 and further including means (270,288) for limiting the integrated velocity error signal.

4. A system according to any of the preceding claims, wherein the second means (132) further includes multiplier means (284) for multiplying the integrated hitch velocity error signal by a gain factor.

5. A system according to any of the preceding claims and further including means (272) to disable the first means (128) when the system is used for draft control.

6. A system according to any of the preceding claims, wherein the first means (128) further includes means for shaping the signal representing the selected point value.

7. A system as claimed in any of the preceeding claims and further including means responsive to the hitch movement command (50) and including means (270,260,272,120) for modifying the hitch movement command in accordance with the integrated hitch velocity error signal and means for controlling the velocity of the hitch in response to the modified command.

8. A system as claimed in any of the preceding claims, wherein the means for selecting the hitch velocity set point value comprises a manually adjustable potentiometer (58).

9. A system as claimed in any of the preceding claims, wherein the hitch movement command generating means (50) includes means responsive to said switch (72,74) for generating a first or a second hitch movement command.

10. A system according to any of the preceding claims and further comprising :-
draft sensing means (24) for producing a draft feedback signal representative of hitch draft;
error determining means responsive to said draft command signal and said draft feedback signal for producing a position error signal;
means responsive to said position error signal for moving the hitch toward the position commanded, and
draft sensitivity control means responsive to changes in said draft command signal for low pass filtering said draft feedback signal before it is applied to said error determining means.

11. A system according to claim 10, wherein the draft sensitivity control means includes a first order low pass filter means with a cut-off frequency of 0.5Hz and said filter means is responsive to said draft feedback signal for supplying to the error determining means a low pass filtered draft feedback signal.

12. A system according to claim 10 or 11, wherein the hitch supports a tillage implement, and wherein means are provided for inhibiting the filtering of said draft feedback signal when the implement is in contact with the ground.

13. A system as claimed in any of claims 10 to 12 and further including means for determining the rate of change of the draft command signal, the draft signal being filtered only if the rate of change of the position signal exceeds a threshold value.

14. A system according to any of claims 10 to 12, wherein the draft signal is filtered only when the command signal changes and filtering is terminated as the hitch approached the commanded position.

15. A system according to any of the preceding claims and further comprising a valve (44) for controlling movement of a hitch (14) mounted on a vehicle and solenoid means (76,78) connected in a series circuit with a switch means (92) across a source of voltage, the switch means (92) being selectively energized to energize the solenoid means (76,78) by closing said series circuit, said hitch control system including circuit means operable in a closed-loop mode to control positioning of the hitch (14) to a position specified by a position command or operable in an open-loop mode to control movement of the hitch in response to actuation of a manual switch (72,74), and apparatus of preventing uncommanded motion of the hitch when the circuit means is operating in the open-loop mode, said apparatus comprising:
a safety disconnect switch (90) for selectively opening the series circuit;
first means for determining if the hitch is captured;
second means for determining if the circuit means is in the open-loop mode;
third means for sensing for movement of the hitch;
fourth means for sensing for actuation of a manual switch; and,
fifth means responsive to said first, second, third and fourth means for energizing said safety disconnect switch when hitch movement is detected and no manual switch is actuated if the hitch is not captured, or the circuit means is in the open-loop mode.

16. A system according to any of the preceding claims and further comprising modifier means (184) for modifying the position signal in accordance with the degree of slip of the vehicle wheels, slip signal generating means (124,126) for generating a slip signal corresponding to the degree of wheel slip, the slip signal generating means including a sensor (80,82) for sensing the rate of rotation of the vehicle wheels, and a radar unit (84) mounted at a side of the vehicle for sensing true ground speed, the system further comprising:
slip signal control means (116) for selectively applying said slip signal to said modifier means (184), said slip signal control means including means (182,190) for preventing application of the slip signal to the modifier means when the position command commands positioning of the hitch higher than a threshold height.

17. A system according to any of the preceding claims and further comprising wheel speed correction factor determining means, comprising means (80,82) for producing a nominal wheel speed signal by sensing rotation of the rear axle of the vehicle, and a radar unit (84) producing a signal representing the true ground speed of the vehicle, said wheel speed correction factor determining means comprising:
divider means (40) for dividing said true ground speed signal by said nominal wheel speed signal to produce a signal representing a wheel speed correction factor; and,
means (40) automatically enabling said divider means when said hitch is raised above a threshold level and the signal representing true ground speed indicates that the vehicle is travelling at greater than a threshold speed.

18. A method of controlling the positioning of a vehicle-mounted hitch, the method including the steps of sensing the position of the hitch and producing a position signal representing the position of the hitch and generating a hitch movement command, and the method being operable in a closed-loop mode in which the hitch movement command is generated responsive to the position signal and an input command to control the position of the hitch, and operable in an open-loop mode in which the movement of the hitch is controlled by a hitch movement command selected by the manual operation of a switch,
characterised in that the method comprises the further steps of :
first limiting the velocity of the hitch to a set point value selectable by manual operation of a potentiometer at least when the system is in the closed-loop mode and;
second limiting the velocity of the hitch to one of two set point values selectable by a switch when the system is in the open-loop mode in which both first and second limiting steps each comprises :
producing a hitch velocity signal by taking the derivative of the position signal;
producing a velocity error signal by subtracting the hitch velocity signal from a signal representing a selected set point value;
integrating the velocity error signal; and
wherein the first limiting step further includes producing a sum signal representing the sum of the integrated velocity error signal and the signal representing the selected set point value; and for finally limiting the hitch movement command responsive to the sum signal.

19. A method according to claim 18, wherein the second limiting includes storing the value of the hitch movement command for subsequent use as an initial value.

20. A method according to claim 18 or 19 and including the further step of limiting the integrated velocity error signal.

21. A method according to any of claims 18 to 20, wherein the second limiting step further includes multiplying the integrated hitch velocity error signal by a gain factor.

22. A method according to any of claims 18 to 21 and including the further step of disabling the first limiting step when the system is used for draft control.

23. A method according to any of claims 18 to 22, wherein the first limiting step further includes sharing the signal representing the selected set point value.

24. A method as claimed in in any of claims 18 to 23, wherein the step of using the integrated hitch velocity error signal to control the velocity of the hitch comprises modifying the hitch movement command with the integrated hitch velocity signal.

25. A method as claimed in any of claims 18 to 24 and further comprising the step of manually actuating a switch to generate said reference value signal.

26. A method as claimed in any of claims 18 to 24 and further comprising the step of manually setting a potentiometer to generate said reference value signal.

27. A method as claimed in claim 26 and further comprising the step of adding to the integrated hitch velocity error signal a drop rate signal determined by the setting of the potentiometer, before the integrated hitch velocity error signal modifies the hitch movement command.

28. A method according to any of claims 18 to 27 and comprising the further steps of :-
providing a feedback loop including draft sensing means (24) for sensing the draft on the hitch and producing a draft signal;
deriving from the draft signal and the command signal an error signal for controlling movement of the hitch,
low pass filtering the draft signal before applying it to the error determining means to eliminate therefrom signal variations caused by the weight of the hitch and implement attached thereto variably acting on the draft sensing means as the vehicle bounces.

29. A method as claimed in claim 28, wherein the filtering of the draft signal is initiated only when the command signal changes, and is terminated as the hitch position approaches the commanded position.

30. A method as claimed in claim 28, wherein the filtering of the draft signal is initiated only when the rate of change of the command signal exceeds a threshold value.

31. A method as claimed in any of claims 28 to 30, wherein the draft signal is not filtered when the implement is in contact with the ground.

32. A method according to any of claims 18 to 31, the system having a valve (44) for controlling movement of the hitch (14) and solenoid means (76,78) connected in a series circuit with a switch means (92) across a source of voltage, the switch means (92) being selectively energized to energize the solenoid means (76,78) by closing said series circuit, said hitch control system including circuit means operable in a closed-loop mode to control positioning of the hitch to a position specified by a position command or operable in an open-loop mode to control movement of the hitch (14) in response to actuation of a manual switch (72,74), the method comprising the further steps of:
providing a safety disconnect switch (90) for selectively opening the series circuit;
determining if the hitch (14) is captured;
determining if the circuit means is in the open-loop mode;
sensing for movement of the hitch (14);
sensing for actuation of a manual switch (72,74); and,
when hitch movement is detected and no manual switch is actuated, energizing said safety disconnect switch if the hitch is not captured or the circuit means is in the open-loop mode, whereby uncommanded motion of the hitch when the circuit means is operating in the open-loop mode is prevented.

33. A method according to any of claims 18 to 32, the system having a valve (44) for controlling movement of the hitch (14) mounted on a vehicle and solenoid (76,78) means connected in a series circuit with a switch means (92) across a source of voltage, the switch means (92) being selectively energized to energize the solenoid means (76,78) by closing said series circuit, said hitch control system including circuit means operable in a closed-loop mode to control positioning of the hitch (14) to a position specified by a position command or operable in an open-loop mode to control movement of the hitch (14) in response to actuation of a manual switch (72,74), the method comprising the further steps of:
providing a safety disconnect switch (90) for selectively disconnecting the solenoid means (76,78) from the positive voltage;
determining if the hitch is captured;
determining if the circuit means is in the open-loop mode;
sensing for movement of the vehicle; and
when vehicle movement is detected, energizing said safety disconnect switch if the hitch is not captured or the circuit means is in the open-loop mode, whereby uncommanded motion of the hitch during transport is prevented.

34. A method according to any of claims 18 to 33, the system having modifier means (184) for modifying the position signal in accordance with the degree of slip of the vehicle wheels, slip signal generating means (80,82,84) for generating a slip signal corresponding to the degree of wheel slip, the slip signal generating means including a sensor (80,82) for sensing the rate of rotation of the vehicle wheels and a sensor unit (84) mounted at a side of the vehicle for sensing true ground speed, the method comprising the further steps of:
as the vehicle approaches a headland, modifying the position command to command raising of the hitch (14) above a threshold height,
inhibiting application of the slip signal to the modifier means (184) when the position command commands a hitch position above said threshold height;
as the vehicle completes a turn, modifying the position command to command lowering of the hitch;
determining when the implement engages the ground as the hitch is lowered; and,
reapplying the slip control signal to the modifier means when it is determined that the implement has engaged the ground,
whereby modification of the position signal by the slip signal during intervals the vehicle is being turned in aheadland is prevented.

35. A method according to any of claims 18 to 34, wherein the system has means for automatically determining a wheel speed correction factor involving a sensor (84) for sensing the true ground speed of a vehicle and producing a first signal representative thereof and a sensor (80,82) for sensing the rate of rotation of the vehicle wheels and producing a second signal representative thereof, said vehicle carrying a hitch (14) having an implement attached thereto, said method comprising the further steps of:
determining when the implement does not engage the ground and the speed of the vehicle is greater than a threshold speed; and,
while the hitch is raised and the true ground speed of the vehicle is greater than the threshold speed, dividing said first signal by said second signal to obtain a correction signal.

## Patentansprüche

1. Elektronisches Zugkraftregelsystem, das zur Steuerung der Positionierung einer an einem Fahrzeug befestigten Anhängekupplung betreibbar ist, wobei das System Positionssensoreinrichtungen (70) zur Messung der Position der Anhängekupplung und zur Erzeugung eines diese darstellenden Signals, und Befehlserzeugungseinrichtungen (50) einschließt, die zur Erzeugung eines Anhängekupplungs-Bewegungsbefehls betreibbar sind, wobei das System in einer Regelschleifen-Betriebsart, bei der die Befehlserzeugungseinrichtung (50) auf die Positions-Sensoreinrichtung (70) und einen Eingangsbefehl anspricht, um die Position der Anhängekupplung zu steuern, und in einer Steuerbetriebsweise mit offener Schleife betreibbar ist, bei der die Bewegung der Anhängekupplung durch einen Anhängekupplungs-Bewegungsbefehl gesteuert ist, der durch einen manuell betätigbaren Schalter (72, 74) ausgewählt wird,
dadurch gekennzeichnet, daß das System folgende Teile umfaßt:
eine erste Einrichtung (128), die zumindestens dann betreibbar ist, wenn sich das System in der Regelschleifenbetriebsart befindet, um die Geschwindigkeit der Anhängekupplung auf einen Sollwert zu begrenzen, der durch eine manuelle Betätigung eines Potentiometers (56) auswählbar ist, und
eine zweite Einrichtung (132), die betreibbar ist, wenn sich das System in der eine offene Schleife aufweisenden Betriebsart befindet, um die Geschwindigkeit der Anhängekupplung auf einen von zwei Sollwerten zu begrenzen, die durch den Schalter (72, 74) auswählbar sind,
wobei die erste und die zweite Einrichtung (128; 132) jeweils:
Ableitungseinrichtungen (266; 280), die auf die Positions-Sensoreinrichtungen (70) ansprechen, um ein Anhängekupplungs-Geschwindigkeitssignal zu erzeugen,
auf das Anhängekupplungs-Geschwindigkeitssignal und einen ausgewählten Sollwert ansprechende Einrichtungen (264; 282) zur Erzeugung eines Geschwindigkeits-Fehlersignals,
Einrichtungen (268; 284) zur Integration des Geschwindigkeitsfehlersignals umfaßt, und
wobei die erste Einrichtung (132) weiterhin:
auf das integrierte Geschwindigkeitsfehlersignal und ein den ausgewählten Sollwert darstellendes Signal ansprechende Einrichtungen (260) zur Erzeugung eines Summensignals, das die Summe des integrierten Geschwindigkeitsfehlersignals und des den ausgewählten Sollwert darstellenden Signals darstellt, und
auf das Summensignal ansprechende Einrichtungen (120) zur Begrenzung des Anhängekupplungs-Bewegungsbefehls einschließt.

2. System nach Anspruch 1, bei dem die zweiten Einrichtungen (132) weiterhin Einrichtungen zum Speichern des Wertes des Anhängekupplungs-Bewegungsbefehls für eine nachfolgende Verwendung als Anfangswert einschließen.

3. System nach Anspruch 1 oder 2, das weiterhin Einrichtungen (270, 288) zur Begrenzung des integrierten Geschwindigkeitsfehlersignals einschließt.

4. System nach einem der vorhergehenden Ansprüche, bei dem die zweite Einrichtung (132) weiterhin Multipliziereinrichtungen (284) zur Multiplikation des integrierten Anhängekupplungs-Geschwindigkeitsfehlersignals mit einem Verstärkungsfaktor einschließt.

5. System nach einem der vorhergehenden Ansprüche, das weiterhin Einrichtungen (272) zum Unwirksammachen der ersten Einrichtung (128) einschließt, wenn das System für eine Zugkraftregelung verwendet wird.

6. System nach einem der vorhergehenden Ansprüche, bei dem die erste Einrichtung (128) weiterhin Einrichtungen zur Formung des den ausgewählten Sollwert darstellenden Signals einschließt.

7. System nach einem der vorhergehenden Ansprüche, das weiterhin Einrichtungen einschließt, die auf den Anhängekupplungs-Bewegungsbefehl (50) ansprechen und Einrichtungen (270, 260, 272, 120) zur Modifikation des Anhängekupplungs-Bewegungsbefehls entsprechend dem integrierten Anhängekupplungs-Geschwindigkeitsfehlersignals und Einrichtungen zur Steuerung der Geschwindigkeit der Anhängekupplung in Abhängigkeit von dem modifizierten Signal einschließen.

8. System nach einem der vorhergehenden Ansprüche, bei die Einrichtungen zur Auswahl des Anhängekupplungs-Geschwindigkeits-Sollwertes ein manuell einstellbares Potentiometer (58) einschließen.

9. System nach einem der vorhergehenden Ansprüche, bei dem die den Anhängekupplungs-Bewegungsbefehl erzeugende Einrichtung (50) eine auf den Schalter (72, 74) ansprechende Einrichtung zur Erzeugung eines ersten oder eines zweiten Anhängekupplungs-Bewegungsbefehls einschließt.

10. System nach einem der vorhergehenden Ansprüche, das weiterhin folgende Teile umfaßt:
Zugkraft-Meßeinrichtungen (24) zur Erzeugung eines Zugkraft-Rückführungssignals, das die Anhängekupplungs-Zugkraft darstellt,
Fehlerbestimmungseinrichtungen, die auf das Zugkraft-Befehlssignal und das Zugkraft-Rückführungssignal ansprechen, um ein Positionsfehlersignal zu erzeugen,
auf das Positionsfehlersignal ansprechende Einrichtungen zur Bewegung der Anhängekupplung in Richtung auf die befohlene Position, und
Zugkraft-Empfindlichkeitssteuereinrichtungen, die auf Änderungen in dem Zugkraft-Befehlssignal ansprechen, um das Zugkraft-Rückführungssignal einer Tiefpaßfilterung zu unterwerfen, bevor es den Fehlerbestimmungseinrichtungen zugeführt wird.

11. System nach Anspruch 10, bei dem die Zugkraft-Empfindlichkeitssteuereinrichtung eine Tiefpaßfiltereinrichtung erster Ordnung mit einer Grenzfrequenz von 0,5 Hz einschließt und die Filtereinrichtung auf das Zugkraft-Rückführungssignal anspricht, um den Fehlerbestimmungseinrichtungen einen tiefpaßgefiltertes zugkraft-Rückführungssignal zuzuführen.

12. System nach Anspruch 10 oder 11, bei dem die Anhängekupplung ein Bodenbearbeitungs-Anbaugerät haltert, und bei dem Einrichtungen zur Sperrung der Filterung des Zugkraft-Rückführungssignals vorgesehen sind, wenn sich das Anbaugerät in Kontakt mit dem Boden befindet.

13. System nach einem der Ansprüche 10 bis 12, das weiterhin Einrichtungen zur Bestimmung der Änderungsgeschwindigkeit des Zugkraft-Befehlssignals einschließt, wobei das Zugkraftsignal lediglich dann gefiltert wird, wenn die Änderungsgeschwindigkeit des Positionssignals einen Schwellenwert übersteigt.

14. System nach einem der Ansprüche 10 bis 12, bei dem das Zugkraftsignal nur dann gefiltert wird, wenn sich das Befehlssignal ändert, und bei dem die Filterung beendet wird, wenn sich die Anhängekupplung der befohlenen Position genähert hat.

15. System nach einem der vorhergehenden Ansprüche, das weiterhin ein Ventil (44) zur Steuerung der Bewegung einer an einem Fahrzeug befestigten Anhängekupplung (14) und Magnetspuleneinrichtungen (76, 78) umfaßt, die in einem Serienkreis mit einer Schaltereinrichtung (92) längs einer Spannungsquelle angeschaltet sind, wobei die Schaltereinrichtung (92) selektiv eingeschaltet wird, um die Magnetspuleneinrichtungen (76, 78) durch Schließen des Serienkreises einzuschalten, wobei das Anhängekupplungs-Regelsystem Schaltungseinrichtungen, die in einer Regelschleifen-Betriebsart zur Steuerung der Positionierung der Anhängekupplung (14) auf eine durch einen Positionsbefehl festgelegte Position betreibbar sind oder die in einer mit Betriebsart mit offener Schleife betreibbar sind, um die Bewegung der Anhängekupplung in Abhängigkeit von der Betätigung eines manuellen Schalters (72, 74) zu steuern, und eine Vorrichtung zur Verhinderung einer nicht befohlenen Bewegung der Anhängekupplung einschließt, wenn die Schaltungseinrichtung in der Betriebsart mit offener Schleife arbeitet, wobei die Vorrichtung folgende Teile umfaßt:
einen Sicherheits-Trennschalter (90) zum selektiven Öffnen des Serienkreises,
erste Einrichtungen zur Bestimmung, ob die Anhängekupplung eingeregelt ist,
zweite Einrichtungen zur Bestimmung, ob sich die Schaltungseinrichtung in einer Betriebsart mit offener Schleife befindet,
dritte Einrichtungen zur Messung einer Bewegung der Anhängekupplung,
vierte Einrichtungen zur Feststellung einer Betätigung eines manuellen Schalters, und
fünfte Einrichtungen, die auf die ersten, zweiten, dritten und vierten Einrichtungen ansprechen, um den Sicherheits-Trennschalter anzusteuern, wenn eine Anhängekupplungsbewegung festgestellt wird und kein manueller Schalter betätigt ist, wenn die Anhängekupplung nicht eingeregelt ist oder wenn sich die Schaltungseinrichtung in der Betriebsart mit offener Schleife befindet.

16. System nach einem der vorhergehenden Ansprüche das weiterhin Modifikationseinrichtungen (184) zur Modifikation des Positionssignals entsprechend dem Ausmaß des Rutschens der Fahrzeugräder, Schlupfsignal-Generatoreinrichtungen (124, 126) zur Erzeugung eines Schlupfsignals, das dem Ausmaß des Rutschens der Räder entspricht, wobei die Schlupfsignal-Generatoreinrichtungen einen Sensor (80, 82) zur Messung der Drehgeschwindigkeit der Fahrzeugräder und eine Radareinheit (84) einschließen, die an einer Seite des Fahrzeuges befestigt ist, um die wahre Bodengeschwindigkeit zu messen, wobei das System weiterhin
Schlupfsignal-Steuereinrichtungen (116) zur selektiven Zuführung des Schlupfsignals an die Modifikationseinrichtungen (184) umfaßt, wobei die Schlupfsignal-Steuereinrichtungen Einrichtungen (182, 190) zur Verhinderung der Zuführung des Schlupfsignals an die Modifikationseinrichtungen einschließen, wenn der Positionsbefehl einen Befehl für die Positionierung der Anhängekupplung auf eine größere Höhe als eine Schwellenwerthöhe gibt.

17. System nach einem der vorhergehenden Ansprüche, das weiterhin Radgeschwindigkeits-Korrekturfaktorbestimmungseinrichtungen umfaßt, die Einrichtungen (80, 82) zur Erzeugung eines Radgeschwindigkeits-Nennsignals durch Messung einer Drehung der Hinterachse des Fahrzeuges und eine Radareinheit (84) umfassen, die ein Signal erzeugt, das die wahre Bodengeschwindigkeit des Fahrzeuges darstellt, wobei die Fahrtgeschwindigkeits-Korrekturfaktorbestimmungseinrichtungen folgende Teile umfaßt:
Dividiereinrichtungen (40) zum Dividieren des wahren Bodengeschwindigkeitssignals durch das nominelle Radgeschwindigkeitssignal zur Erzeugung eines Signals, das einen Radgeschwindigkeits-Korrekturfaktor darstellt, und
Einrichtungen (40) zur automatischen Freigabe der Dividiereinrichtungen, wenn die Anhängekupplung über einen Schwellenwertpegel hinaus angehoben wird und das die wahre Bodengeschwindigkeit darstellende Signal anzeigt, daß sich das Fahrzeug einer größeren Geschwindigkeit als eine Schwellenwertgeschwindigkeit bewegt.

18. Verfahren zur Positionierung einer an einem Fahrzeug befestigten Anhängekupplung, wobei das Verfahren die Schritte der Messung der Position der Anhängekupplung und der Erzeugung eines die Position der Anhängekupplung darstellenden Positionssignals und der Erzeugung eines Anhängekupplungs-Bewegungssignals einschließt, und wobei das Verfahren in einer Regelschleifen-Betriebsart betreibbar ist, in der der AnhängkupplungsBewegungsbefehl in Abhängigkeit von dem Positionssignal und einem Eingangsbefehl zur Steuerung der Position der Anhängekupplung erzeugt wird, und in einer Betriebsart mit offener Schleife betreibbar ist, in der die Bewegung der Anhängekupplung durch einen Anhängekupplungs-Bewegungsbefehl gesteuert wird, der durch die manuelle Betätigung eines Schalters ausgewählt wird, dadurch gekennzeichnet, daß das Verfahren die folgenden weiteren Schritte umfaßt:
erstens Begrenzen der Geschwindigkeit der Anhängekupplung auf einen Sollwert, der durch die manuelle Betätigung eines Potentiometers auswählbar ist, zumindestens wenn sich das System in der Betriebsart mit geschlossener Regelschleife befindet, und
zweitens Begrenzen der Geschwindigkeit der Anhängekupplung auf einen von zwei Sollwerten, die durch einen Schalter auswählbar sind, wenn sich das System in der Betriebsart mit offener Schleife befindet, wobei sowohl der erste als auch der zweite Begrenzungsschritt jeweils folgende Schritte umfaßt:
Erzeugen eines Anhängekupplungs-Geschwindigkeitssignals durch Bilden der Ableitung des Positionssignals,
Erzeugen eines Geschwindigkeitsfehlersignals durch Subtrahieren des Anhängekupplungs-Geschwindigkeitssignals von einem einen ausgewählten Sollwert darstellenden Signal,
Integrieren des Geschwindigkeitsfehlersignals, und
wobei der erste Begrenzungsschritt weiterhin die Erzeugung eines Summensignals, das die Summe des integrierten Geschwindigkeitsfehlersignals und des den ausgewählten Sollwert darstellenden Signals darstellt, und das abschließende Begrenzen des Anhängekupplungs-Bewegungsbefehls in Abhängigkeit von dem Summensignal einschließt.

19. Verfahren nach Anspruch 18, bei dem das zweite Begrenzen das Speichern des Wertes des Anhängekupplungs-Bewegungsbefehls für eine nachfolgende Verwendung als Anfangswert einschließt.

20. Verfahren nach Anspruch 18 oder 19, das den weiteren Schritt der Begrenzung des integrierten Geschwindigkeitsfehlersignals einschließt.

21. Verfahren nach einem der Ansprüche 18 bis 20, bei dem der zweite Begrenzungsschritt weiterhin eine Multiplikation des integrierten Anhängekupplungs-Geschwindigkeitsfehlersignals mit einem Verstärkungsfaktor einschließt.

22. Verfahren nach einem der Ansprüche 18 bis 21, das den weiteren Schritt des Unwirksammachens des ersten Begrenzungsschrittes einschließt, wenn das System für eine Zugkraftregelung verwendet wird.

23. Verfahren nach einem der Ansprüche 18 bis 22, bei dem der erste Begrenzungsschritt weiterhin eine gemeinsame Verwendung des den ausgewählten Sollwert darstellenden Signals einschließt.

24. Verfahren nach einem der Ansprüche 18 bis 23, bei dem der Schritt der Verwendung des integrierten Anhängekupplungs-Geschwindigkeitsfehlersignals zur Steuerung der Geschwindigkeit der Anhängekupplung die Modifikation des Anhängekupplungs-Bewegungsbefehls mit dem integrierten Anhängekupplungs-Geschwindigkeitssignal umfaßt.

25. Verfahren nach einem der Ansprüche 18 bis 24, das weiterhin den Schritt der manuellen Betätigung eines Schalters zur Erzeugung des Bezugswertsignals umfaßt.

26. Verfahren nach einem der Ansprüche 18 bis 24, das weiterhin den Schritt der manuellen Einstellung eines Potentiometers zur Erzeugung des Bezugswertsignals umfaßt.

27. Verfahren nach Anspruch 26, das weiterhin den Schritt des Addierens eines Absenkgeschwindigkeitssignals, das durch die Einstellung des Potentiometers bestimmt ist, zu dem integrierten Anhängekupplungs-Geschwindigkeitsfehlersignal umfaßt, bevor das integrierte Anhängekupplungs-Geschwindigkeitsfehlersignal den Anhängekupplungs-Bewegungsbefehl modifiziert.

28. Verfahren nach einem der Ansprüche 18 bis 27, das die folgenden weiteren Schritte umfaßt:
Bildung einer Rückführungsschleife, die Zugkraft-Sensoreinrichtungen (24) zur Messung der Zugkraft auf die Anhängekupplung und zur Erzeugung eines Zugkraftsignals einschließt,
Ableitung eines Fehlersignals aus dem Zugkraftsignal und dem Befehlssignal zur Steuerung der Bewegung der Anhängekupplung,
Tiefpaßfilterung des Zugkraftsignals, bevor dieses den Fehlerbestimmungseinrichtungen zugeführt wird, um aus diesem Signaländerungen zu beseitigen, die durch das Gewicht der Anhängekupplung und des daran befestigten Anbaugerätes hervorgerufen werden, das in veränderlicher Weise auf die Zugkraft-Sensoreinrichtungen wirkt, wenn das Fahrzeug Prellbewegungen ausführt.

29. Verfahren nach Anspruch 28, bei dem die Filterung des Zugkraftsignals nur dann eingeleitet wird, wenn sich das Befehlssignal ändert, und daß sie beendet wird, wenn sich die Anhängekupplungs-Position der Befehlsposition nähert.

30. Verfahren nach Anspruch 28, bei dem die Filterung des Zugkraftsignals nur dann eingeleitet wird, wenn die Änderungsgeschwindigkeit des Befehlssignals einen Schwellenwert übersteigt.

31. Verfahren nach einem der Ansprüche 28 bis 30, bei dem das Zugkraftsignal nicht gefiltert wird, wenn sich das Anbaugerät in Kontakt mit dem Boden befindet.

32. Verfahren nach einem der Ansprüche 18 bis 31, wobei das System ein Ventil (44) zur Steuerung der Bewegung der Anhängekupplung (14) und Magnetspuleneinrichtungen (76, 78) aufweist, die in einem Serienkreis mit einer Schaltereinrichtung (92) längs einer Spannungsquelle angeschaltet sind, wobei die Schaltereinrichtung (92) selektiv eingeschaltet wird, um die Magnetspuleneinrichtung (76, 78) durch Schließen des Serienkreises einzuschalten, wobei das Anhängekupplungs-Regelsystem Schaltungseinrichtungen einschließt, die in einer Betriebsart mit geschlossener Regelschleife zur Steuerung der Positionierung der Anhängekupplung auf eine durch einen Positionsbefehl festgelegte Position betreibbar sind, oder die in einer Betriebsart mit offener Schleife zur Steuerung der Bewegung der Anhängekupplung (14) in Abhängigkeit von der Betätigung eines manuellen Schalters (72, 74) betreibbar sind, wobei das Verfahren die folgenden weiteren Schritte umfaßt:
Verwendung eines Sicherheits-Trennschalters (90) zum selektiven Öffnene des Serienkreises,
Feststellung, ob die Anhängekupplung (14) eingeregelt ist,
Feststellung, ob sich die Schaltungseinrichtung in der Betriebsart mit offener Schleife befindet,
Messen einer Bewegung der Anhängekupplung (14),
Messen einer Betätigung eines manuellen Schalters (72, 74), und
bei Feststellung einer Bewegung der Anhängekupplung ohne Betätigung eines manuellen Schalters, Einschalten des Sicherheits-Trennschalters, wenn die Anhängekupplung nicht eingeregelt ist oder die Schaltungseinrichtung sich in der Betriebsart mit offener Schleife befindet, wodurch eine nicht befohlene Bewegung der Anhängekupplung verhindert wird, wenn die Schaltungseinrichtung in der Betriebsart mit offener Schleife arbeitet.

33. Verfahren nach einem der Ansprüche 18 bis 32, bei dem das System ein Ventil (44) zur Steuerung der Bewegung der an einem Fahrzeug befestigten Anhängekupplung (14) und Magnetspuleneinrichtungen (76, 78) aufweist, die in einem Serienkreis mit einer Schaltereinrichtung (92) längs einer Spannungsquelle angeschaltet sind, wobei die Schaltereinrichtung (92) selektiv eingeschaltet wird, um die Magnetspuleneinrichtungen (76, 78) durch Schließen des Serienkreises einzuschalten, wobei das Anhängekupplungs-Regelsystem Schaltungseinrichtungen einschließt, die in einer Betriebsart mit geschlossener Regelschleife zur Steuerung der Positionierung der Anhängekupplung (14) auf eine durch einen Positionsbefehl festgelegte Position betreibbar sind oder die in eine Betriebsart mit offener Schleife betreibbar sind, um die Bewegung der Anhängekupplung (14) in Abhängigkeit von der Betätigung eines manuellen Schalters (72, 74) zu steuern, wobei das Verfahren die folgenden weiteren Schritte umfaßt:
Verwendung eines Sicherheits-Trennschalters (90) zum selektiven Abtrennen der Magnetspuleneinrichtungen (76, 78) von der positiven Spannung;
Feststellung, ob die Anhängekupplung eingeregelt ist,
Feststellung, ob sich die Schaltungseinrichtung in der Betriebsart mit offener Schleife befindet,
Messung einer Bewegung des Fahrzeuges, und
bei Feststellung einer Bewegung des Fahrzeuges, Ansteuern des Sicherheits-Trennschalters, wenn die Anhängekupplung nicht eingeregelt ist oder die Schaltungseinrichtung sich in der Betriebsart mit offener Schleife befindet, wodurch eine nicht befohlene Bewegung der Anhängekupplung während des Transports verhindert wird.

34. Verfahren nach einem der Ansprüche 18 bis 33, wobei das System Modifikationseinrichtungen (184) zur Modifikation des Positionssignals entsprechend dem Ausmaß des Rutschens der Fahrzeugräder und Schlupfsignal-Generatoreinrichtungen (80, 82, 84) zur Erzeugung eines Schlupfsignals einschließen, das dem Ausmaß des Rutschens der Räder entspricht, wobei die Schlupfsignal-Generatoreinrichtungen einen Sensor (80, 82) zur Messung der Drehgeschwindigkeit der Fahrzeugräder und eine Sensoreinheit (84) aufweisen, die an einer Seite des Fahrzeuges befestigt sind, um die wahre Bodengeschwindigkeit zu messen, wobei das Verfahren die weiteren folgenden Schritte umfaßt:
Modifikation des Positionsbefehls für einen Befehl zum Anheben der Anhängekupplung (14) über eine Schwellenwerthöhe hinaus, wenn sich das Fahrzeug einem Wendebereich nähert,
Sperren der Zuführung des Schlupfsignals an die Modidfikationseinrichtungen (184), wenn der Positionsbefehl einen Befehl für eine Position der Anhängekupplung oberhalb der Schwellenwerthöhe gibt,
Modifikation des Positionssignals für einen Befehl zum Absenken der Anhängekupplung, wenn das Fahrzeug eine Wendekurve beendet,
Feststellung, wann das Anbaugerät mit dem Boden in Eingriff kommt, wenn die Anhängekupplung abgesenkt wird, und
erneutes Zuführen des Schlupfsteuersignals an die Modifikationseinrichtungen, wenn festgestellt wurde, daß das Anbaugerät mit dem Boden in Eingriff gekommen ist, wodurch die Modifikation des Positionssignals durch das Schlupfsignal während der Intervalle verhindert wird, zu denen das Fahrzeug eine Wendebewegung in einem Wendebereich ausführt.

35. Verfahren nach einem der Ansprüche 18 bis 34, bei dem das System Einrichtungen zur automatischen Bestimmung eines Radgeschwindigkeits-Korrekturfaktors aufweist, die einen Sensor (84) zur Messung der wahren Bodengeschwindigkeit eines Fahrzeuges und zur Erzeugung eines ersten diese wahre Bodengeschwindgkeit darstellenden Signals und einen Sensor (80, 82) zur Messung der Drehgeschwindigkeit der Fahrzeugräder und zur Erzeugung eines zweiten diese Drehgeschwindigkeit darstellenden Signals einschließen, wobei das Fahrzeug eine Anhängekupplung (14) trägt, an dem ein Anbaugerät befestigt ist, und wobei das Verfahren weiterhin die folgenden Schritte umfaßt:
Feststellen, wenn das Anbaugerät nicht mit dem Boden in Eingriff steht und die Geschwindigkeit des Fahrzeuges größer als eine Schwellenwertgeschwindigkeit ist, und
Dividieren des ersten Signals durch das zweite Signal zur Gewinnung eines Korrektursignals, während die Anhängekupplung angehoben ist und die wahre Bodengeschwindigkeit des Fahrzeuges größer als die Schwellenwertgeschwindigkeit ist.

## Revendications

1. Un système électronique de contrôle de traction utilisable pour contrôler la position d'un attelage monté sur un véhicule, le système comprenant des moyens de détection (70) de la position de l'attelage qui en produisent un signal représentatif, et un moyen de génération de commande (50) destiné à fournir une commande de mouvement de l'attelage, le système étant utilisable en mode de boucle fermée dans lequel le moyen de génération de commande (50) réagit aux moyens de détection de position (70) et à une commande d'entrée afin de contrôler la position de l'attelage, et en mode de boucle ouverte dans lequel le mouvement de l'attelage est contrôlé par une commande de mouvement d'attelage sélectionnée à partir d'un commutateur actionné manuellement (72,74),
caractérisé en ce que le système comprend:
un premier moyen (128) utilisable tout au moins lorsque le système est en mode de boucle fermée, afin de limiter l'allure de l'attelage à une valeur de point de réglage sélectionnable par manipulation d'un potentiomètre (56); et
un second moyen (132) utilisable lorsque le système est en mode de boucle ouverte, afin de limiter l'allure de l'attelage à l'une des deux valeurs de point de réglage sélectionnables à partir du commutateur (72,74),
dans lequel, le premier et le second moyen (128;132) comprennent chacun:
des moyens de dérivation (266;280) réagissant aux moyens de détection (70) pour fournir un signal d'allure d'attelage;
des moyens (264;282) réagissant au signal d'allure d'attelage et à une valeur de point de réglage sélectionnée, afin de produire un signal d'erreur d'allure;
des moyens (268;284) pour l'intégration du signal d'erreur d'allure; et
dans lequel le premier moyen (132) comprend en outre:
un moyen (260), réagissant au signal intégré d'erreur d'allure et à un signal représentant la valeur de réglage sélectionnée, pour produire un signal d'addition représentant la somme du signal intégré d'erreur d'allure et le signal représentant la valeur de point de réglage sélectionnée; et
un moyen (120) réagissant au signal d'addition pour limiter la commande de mouvement de l'attelage.

2. Système selon la revendication 1, où ledit second moyen (132) comprend en outre un moyen d'enregistrement de la valeur de la commande de mouvement de l'attelage pour un usage ultérieur en tant que valeur initiale.

3. Système selon la revendication 1 ou 2 et comprenant en outre des moyens (270, 288) de limitation du signal intégré d'erreur d'allure.

4. Système selon l'une quelconque des revendications précédentes, où le second moyen (132) comprend en outre un moyen de multiplication (284) du signal intégré d'erreur d'allure d'attelage par un facteur d'amplification.

5. Système selon l'une quelconque des revendications précédentes et comprenant en outre un moyen (272) pour désactiver le système le premier moyen (128) lorsque le système est utilisé en tant que contrôle de traction.

6. Système selon l'une quelconque des revendications précédentes, où le premier moyen (128) comprend en outre un moyen de profilage du signal représentant la valeur de point sélectionnée.

7. Système selon l'une quelconque des revendications précédentes et comprenant en outre un moyen réagissant à la commande de mouvement d'attelage (50) et comprenant les moyens (270,260,272,120) pour modifier la commande de mouvement d'attelage en fonction du signal intégré d'erreur d'allure d'attelage et des moyens de contrôle de l'allure de l'attelage en réponse à une commande modifiée.

8. Système selon l'une quelconque des revendications précédentes, où le moyen de sélection de la valeur de point de réglage d'allure d'attelage comprend un potentiomètre réglable manuellement (58).

9. Système selon l'une quelconque des revendications précédentes, où le moyen de génération de commande de mouvement d'attelage (50) comprend un moyen réagissant au dit commutateur (72,74) pour la génération d'une première ou d'une seconde commande de mouvement d'attelage.

10. Système selon l'une quelconque des revendications précédentes et comprenant en outre: -
des moyens de détection de traction (24) pour produire un signal de retour de traction correspondant à la traction sur l'attelage;
des moyens de détermination d'erreur répondant audit signal de commande de traction et audit signal de retour de traction pour produire un signal d'erreur de position;
des moyens de contrôle de sensibilité de traction répondant aux changements dans ledit signal de commande de traction pour filtration passe-bas dudit signal de retour avant qu'il soit transmis auxdits moyens de détermination d'erreur.

11. Système selon la revendication 10, dans lequel les moyens de contrôle de sensibilité de traction comprennent des moyens de filtre passe-bas sans harmoniques, avec une fréquence de coupure à 0,5 Hz, et lesdits moyens de filtre répondent audit signal de retour pour fournir aux moyens de détermination d'erreur un signal de retour de traction filtré passe-bas.

12. Système selon la revendication 10 ou 11, dans lequel l'attelage supporte un outil agricole, et dans lequel des moyens sont réalisés pour empêcher la filtration dudit signal de retour de traction lorsque l'outil est en contact avec le sol.

13. Système selon l'une quelconque des revendications 10 à 12 et comprenant en outre des moyens pour déterminer la vitesse de changement du signal de commande de traction, le signal de retour de traction étant filtré uniquement si la vitesse de changement du signal de position dépasse une valeur seuil.

14. Système selon l'une quelconque des revendications 10 à 12, dans lequel le signal de retour de traction est filtré uniquement lorsque le signal de commande change et lorsque la filtration est terminée quand l'attelage approche de la position commandée.

15. Système selon l'une quelconque des revendications précédentes et comprenant en outre une vanne (44) de contrôle de mouvement d'un attelage (14) montée sur un véhicule, et des moyens de solénoïdes (76,78) connectés dans un circuit en série, avec le moyen de commutation (92), à une source de tension, le moyen de commutation (92) étant activé sélectivement pour stimuler les moyens de solénoïdes (76,78) en fermant ledit circuit en série, ledit système de contrôle d'attelage comprenant un moyen de circuit utilisable en mode de boucle fermée pour contrôler le positionnement de l'attelage (14) par rapport à une position spécifiée par une commande de position, ou utilisable en mode de boucle ouverte pour contrôler le mouvement de l'attelage en réponse à l'activation d'un commutateur manuel (72,74), et un appareil pour éviter un mouvement non commandé de l'attelage lorsque le moyen de circuit est en service en mode de boucle ouverte, ledit appareil comprenant:
un relais de sécurité de déconnexion (90) pour ouvrir sélectivement le circuit en série;
un premier moyen de détermination de la prise de l'attelage;
un second moyen pour déterminer si le moyen de circuit est en mode de boucle ouverte;
un troisième moyen de détection de mouvement de l'attelage;
un quatrième moyen de détection de l'activation d'un commutateur manuel; et,
un cinquième moyen réagissant aux dits premier, second, troisième et quatrième moyens pour l'activation dudit relais de sécurité de déconnexion lorsque le mouvement de l'attelage est détecté et qu'aucun commutateur manuel n'est activé, si l'attelage n'est pas en prise ou si le moyen de circuit est en mode de boucle ouverte.

16. Système selon l'une quelconque des revendications précédentes et comprenant de surcroît un moyen de modification du signal de position en fonction du degré de patinage des roues du véhicule, un moyen d'émission d'un signal de patinage (124,126) pour fournir un signal de patinage correspondant au degré de patinage de roue, le moyen d'émission de signal de patinage comprenant un capteur (80, 82) de détection de la vitesse de rotation des roues du véhicule, et une unité de radar (84) montée sur une face du véhicule afin de mesurer la vitesse au sol, le système comprenant de plus:
un moyen de contrôle (116) du signal de patinage afin d'appliquer sélectivement ledit signal de patinage au dit moyen de modification (184), ledit moyen de contrôle du signal de patinage comprenant des moyens (182, 190) pour éviter l'application du signal de patinage au moyen de modification lorsque la commande de position demande un positionnement d'attelage plus élevé que le niveau de seuil.

17. Système selon l'une quelconque des revendications précédentes et comprenant en outre des moyens de détermination d'un facteur de correction de vitesse des roues, comprenant des moyens (80, 82) de production d'un signal de vitesse nominale de roue en détectant la rotation de l'essieu arrière du véhicule, et une unité de radar (84) produisant un signal représentant la vitesse réelle au sol du véhicule, ledit moyen de détermination du facteur de correction de vitesse comprenant:
des moyens de diviseur (40) pour diviser ledit signal de vitesse réelle au sol par le signal venant du détecteur (80,82) pour produire un signal correspondant à un facteur de correction de vitesse des roues; et
des moyens (40) autorisant automatiquement lesdits moyens de diviseur, lorsque ledit attelage est levé au-dessus d'un niveau de seuil et lorsque le signal représentant la vitesse réelle au sol indique que le véhicule se déplace à une vitesse supérieure à un seuil de vitesse.

18. Une méthode de contrôle du positionnement d'un attelage monté sur véhicule, la méthode comprenant les étapes de détection de la position de l'attelage et produisant un signal de position représentant la position de l'attelage et générant une commande de mouvement d'attelage, et la méthode étant utilisable en mode de boucle fermée dans lequel la commande de mouvement de l'attelage est générée en réagissant au signal de position et à une commande d'entrée pour contrôler la position de l'attelage, et utilisable en mode de boucle ouverte dans lequel le mouvement de l'attelage est contrôlé par une commande de mouvement d'attelage sélectionnée par l'activation manuelle d'un commutateur,
caractérisée en ce que la méthode comprend les étapes supplémentaires de:
première limitation de l'allure de l'attelage à une valeur de point de réglage sélectionnable manuellement à partir d'un potentiomètre du moins lorsque le système est en mode de boucle fermée, et;
seconde limitation de l'allure de l'attelage à l'une des deux valeurs de point de réglage sélectionnables à partir d'un commutateur lorsque le système est en mode de boucle ouverte dans lequel les étapes de première et de seconde limitations comprennent chacune:
la production d'un signal d'allure d'attelage en effectuant la dérivée du signal de position;
la production d'un signal d'erreur d'allure en soustrayant le signal d'allure d'attelage d'un signal représentant une valeur de point de réglage sélectionnée;
l'intégration du signal d'erreur d'allure; et
où la l'étape de première limitation comprend en outre la production d'un signal d'addition représentant la somme du signal intégré d'erreur d'allure et le signal représentant la valeur de point de réglage sélectionnée; et pour limiter finalement la commande de mouvement d'attelage réagissant au signal d'addition.

19. Méthode selon la revendication 18, où la seconde limitation comprend l'enregistrement de la valeur de commande de mouvement d'attelage pour usage ultérieur en tant que valeur initiale.

20. Méthode selon la revendication 18 ou 19 et incluant l'étape supplémentaire de limitation du signal intégré d'erreur d'allure.

21. Méthode selon l'une quelconque des revendications 18 à 20, où l'étape de la seconde limitation comprend, en outre, la multiplication du signal intégré d'erreur d'allure d'attelage par un facteur d'amplification.

22. Méthode selon l'une quelconque des revendications 18 à 21 et incluant l'étape supplémentaire de désactivation de l'étape de la première limitation lorsque le système est utilisé en tant que contrôle de traction.

23. Méthode selon l'une quelconque des revendications 18 à 22, où l'étape de la première limitation comprend, en outre, le partage du signal représentant la valeur de point de réglage sélectionnée.

24. Méthode selon l'une quelconque des revendications 18 à 23, où l'étape d'utilisation du signal intégré d'erreur d'allure d'attelage, destiné au contrôle de l'allure de l'attelage, comprend la modification de la commande de mouvement de l'attelage à partir du signal intégré d'allure d'attelage.

25. Méthode selon l'une quelconque des revendications 18 à 24 et comprenant en outre l'étape d'activation manuelle d'un commutateur pour générer ledit signal de valeur de référence.

26. Méthode selon l'une quelconque des revendications 18 à 24 et comprenant en outre l'étape de réglage manuel d'un potentiomètre pour générer ledit signal de valeur de référence.

27. Méthode selon la revendication 26 et comprenant en outre l'étape d'addition au signal intégré d'erreur d'allure d'attelage, d'un signal d'allure d'abaissement déterminé par le réglage du potentiomètre, avant que le signal intégré d'erreur d'allure d'attelage ne modifie la commande de mouvement d'attelage.

28. Méthode selon l'une quelconque des revendications 18 à 27 et comprenant les étapes supplémentaires: -
de prévision d'une boucle réactive incluant les moyens de détection de traction (24) pour la détection de la traction sur l'attelage et la production d'un signal de traction;
d'obtention, à partir du signal de traction et du signal de commande, d'un signal d'erreur afin de contrôler le mouvement de l'attelage,
de filtration passe-bas du signal de traction avant de l'appliquer aux moyens de détermination de l'erreur, afin d'en éliminer des variations de signal dues au poids de l'attelage et de l'outil y attaché qui agissent variablement sur les moyens de détection de traction si le véhicule subit des rebonds.

29. Méthode selon la revendication 28, où le filtrage du signal de traction est initié uniquement lorsque le signal de commande est modifié, et est interrompu dès que la position de l'attelage approche de la position commandée.

30. Méthode selon la revendication 28, où le filtrage du signal de traction est initié uniquement lorsque le degré de changement du signal de commande excède une valeur-seuil.

31. Méthode selon l'une quelconque des revendications 28 à 30, où le signal de traction n'est pas filtré lorsque l'outil est en contact avec le sol.

32. Méthode selon l'une quelconque des revendications 18 à 31, le système possédant une vanne (44) pour le contrôle du mouvement de l'attelage (14) et des moyens de solénoïdes (76,78) connectés dans un circuit en série avec un moyen de commutation (92) branché sur une source de tension, le moyen de commutation (92) étant activé sélectivement pour stimuler les moyens de solénoïdes (76, 78) en fermant ledit circuit en série, ledit système de contrôle d'attelage comprenant un moyen de circuit utilisable en mode de boucle fermée pour le contrôle de positionnement de l'attelage vers une position spécifiée par une commande de position, ou utilisable en mode de boucle ouverte pour le contrôle de mouvement de l'attelage (14) en réponse à l'activation d'un commutateur manuel (72, 74), la méthode comprenant les étapes supplémentaires:
de prévision d'un relais de sécurité de déconnexion (90) pour l'ouverture sélective du circuit en série;
de détermination de prise de l'attelage (14);
de détermination du fait que le moyen de circuit est en mode de boucle ouverte;
de détection de mouvement de l'attelage (14);
de détection de l'activation d'un commutateur manuel (72,74); et,
lorsque le mouvement de l'attelage est détecté et qu'aucun commutateur manuel n'a été manoeuvré, d'activation dudit relais de sécurité de déconnexion si l'attelage n'est pas en prise ou si le moyen de circuit est en mode de boucle ouverte, où tout mouvement non commandé de l'attelage est empêché lorsque le moyen de circuit est en mode de boucle ouverte.

33. Méthode selon l'une quelconque des revendications 18 à 32, le système possédant une vanne (44) pour le contrôle du mouvement de l'attelage (14) monté sur un véhicule et des moyens de solénoïdes (76,78) connectés dans un circuit en série avec un moyen de commutation (92) et branchés sur une source de tension, le moyen de commutation (92) étant activé sélectivement pour stimuler les moyens de solénoïdes (76, 78) en fermant ledit circuit en série, ledit système de contrôle d'attelage comprenant un moyen de circuit utilisable en mode de boucle fermée pour contrôler le positionnement de l'attelage (14) vers une position spécifiée par une commande de position, ou utilisable en mode de boucle ouverte pour contrôler le mouvement de l'attelage (14) en réponse à l'activation d'un commutateur manuel (72, 74), la méthode comprenant les étapes supplémentaires:
de prévision d'un relais de sécurité de déconnexion (90) pour déconnecter les moyens de solénoïdes (76,78) de la tension positive;
de détermination de la prise de l'attelage;
de détermination du fait que le circuit est en mode de boucle ouverte;
de détection du mouvement du véhicule; et
lorsque le mouvement du véhicule est détecté, d'activation dudit relais de sécurité de déconnexion si l'attelage n'est pas en prise ou si le moyen de circuit est en mode de boucle ouverte, où tout mouvement non commandé de l'attelage durant le transport est empêché.

34. Méthode selon l'une quelconque des revendications 18 à 33, le système possédant des moyens de modificateur (184) pour modifier le signal de position conformément au taux de patinage des roues de véhicule, des moyens de génération de signal de patinage (80,82,84) pour générer un signal de patinage correspondant au taux de patinage des roues, les moyens de génération de signal de patinage comprenant un détecteur (80,82) pour détecter la vitesse de rotation des roues de véhicule et une unité de détection (84) montée d'un côté du véhicule, pour détecter une vitesse réelle au sol, la méthode comprenant les étapes supplémentaires pour:
lorsque le véhicule approche d'une fourrière, modifier la commande de position pour ordonner un relèvement de l'attelage (14) au-dessus dudit seuil de hauteur;
empêcher la transmission du signal de patinage aux moyens de modificateur (184) lorsque la commande de position ordonne une position d'attelage au-dessus de la hauteur seuil;
lorsque le véhicule termine un virage, modifier la commande de position pour ordonner un abaissement de l'attelage;
déterminer quand l'outil entre en contact avec le sol lorsque l'attelage est abaissé; et
transmettre à nouveau le signal de contrôle de patinage aux moyens de modificateur lorsqu'il est déterminé que l'outil est entré en contact avec le sol,
grâce à quoi une modification du signal de commande de position par le signal de patinage durant des intervalles pendant lesquels le véhicule est tourné dans une fourrière est empêché.

35. Méthode selon l'une quelconque des revendications 18 à 34, où le système possède des moyens de détermination automatique d'un facteur de correction de vitesse de roue nécessitant un capteur (84) de détection de vitesse réelle au sol d'un véhicule et de production d'un premier signal qui en est représentatif, et un capteur (80, 82) pour la détection de la vitesse de rotation des roues du véhicule et la production d'un second signal qui en est représentatif, ledit véhicule portant un attelage (14) auquel est attaché un outil, ladite méthode comprenant les étapes supplémentaires pour:
déterminer quand l'outil ne s'engage pas dans le sol et quand la vitesse du véhicule est plus grande qu'une valeur-seuil de vitesse; et,
lorsque l'attelage est relevé et que la vitesse réelle au sol du véhicule est plus grande que la vitesse-seuil, pour diviser ledit premier signal par ledit second signal afin d'obtenir un signal de correction.
